# FASCICULE DE BREVET EUROPEEN

(11) **EP 0 599 695 B1**
(45) Date de publication et mention de la délivrance du brevet: **19.03.1997**
(21) Numéro de dépôt: 93402783.0
(22) Date de dépôt: 16.11.1993
(51) Int. Cl.: D02G 1/18, D01D 5/08

(54) **Procédé et dispositif de formation d'un fil composite**
Verfahren und Vorrichtung zur Herstellung eines Verbundgarn
Method and apparatus for the production of a composite yarn

(30) Priorité: 19.11.1992 FR 9213884
(43) Date de publication de la demande: 01.06.1994
(73) Titulaire: VETROTEX FRANCE, F-73000 Chambéry (FR)
(72) Inventeur: Roncato, Giordano, F-73100 Aix les Bains (FR); Boissonnat, Philippe, F-73230 Barby (FR); Loubinoux, Dominique, 38660 La Terrasse (FR)
(74) Mandataire: Menes, Catherine

(56) Documents cités:
- EP-A- 0 367 661
- EP-A- 0 505 274
- DE-A- 3 617 248
- FR-A- 2 232 620

## Description

L'invention concerne un procédé et un dispositif de fabrication d'un fil composite formé par l'association d'une multiplicité de filaments continus de verre et de filaments continus de matière organique thermoplastique. La fabrication d'un tel fil composite est décrite dans la demande de brevet EP-A-0 367 661. Ce document décrit des installations comprenant une filière, à partir de laquelle sont étirés des filaments continus de verre, et une tête de filage, alimentée sous pression par une matière organique thermoplastique, délivrant des filaments continus organiques. Les deux types de filaments peuvent être sous forme de nappes, ou de nappe et de fil, lors de l'assemblage. Un mode de réalisation avantageux décrit dans ce document consiste à entourer les filaments ou le fil de verre par les filaments organiques lors de leur réunion. Un fil composite ainsi réalisé présente l'avantage de protéger les filaments de verre des frottements sur les surfaces solides avec lesquelles le fil composite vient en contact. Par contre, cet arrangement ne favorise pas une parfaite homogénéisation du mélange des deux types de filaments. En effet, une coupe droite du fil composite montre des zones privilégiées pour chaque type de filaments, ce qui peut être un mode d'assemblage recherché, pour certaines applications.

Par ailleurs, ces fils composites présentent une ondulation. Celle-ci est flagrante lorsque les fils se présentent sous forme de bobines car les bobines ondulent sur toute leur périphérie. Cette ondulation du fil composite est due en fait à un phénomène de retrait des filaments organiques qui entraine une ondulation des filaments de verre. Ce phénomène présente différents inconvénients. Tout d'abord, il nécessite des manchettes épaisses pour la réalisation des bobines de façon à ce qu'elles supportent le frettage exercé par le fil composite. De plus, le dévidage de la bobine devient très délicat du fait des modifications de géométrie. Cette présentation du fil peut être avantageuse lorsque, par exemple, elle entre dans la structure d'un tissu qui servira ultérieurement à renforcer une pièce galbée. La souplesse du tissu, conférée à la fois par l'aptitude à la déformation des filaments organiques et l'ondulation des filaments de verre, favorise la mise en place dans un moule. Par contre, pour la réalisation de fils composites destinés à la fabrication de pièces planes renforcés dans une direction, cette présentation est un handicap. Les filaments n'étant pas alignés dans le composite final, leur capacité de renforcement dans une direction déterminée est amoindrie.

L'invention a pour objet un procédé de fabrication d'un fil composite qui ne présente aucune ondulation lors de sa formation et qui reste stable dans le temps.

Ce problème posé par le retrait des filaments thermoplastiques au sein d'un fil composite qui contient des filaments de verre est résolu par un procédé de fabrication, d'un fil composite formé par l'association de filaments continus de verre issus d'une filière et de filaments continus de matière organique thermoplastique issus d'une tête de filage dans lequel les filaments thermoplastiques sont mêlés sous forme d'une nappe à un faisceau ou nappe de filaments de verre avec une vitesse lors de leur pénétration dans le faisceau ou nappe de filaments de verre, supérieure à la vitesse d'étirage des filaments de verre.

Selon un mode préféré de l'invention, les filaments thermoplastiques sont projetés sous forme d'une nappe sur un faisceau ou nappe de filaments de verre.

Il est également possible de guider les filaments thermoplastiques sous forme d'une nappe jusqu'au faisceau ou nappe de filaments de verre.

Ce procédé permet d'obtenir dans un premier temps un enchevêtrement de fils thermoplastiques ondulés au milieu des filaments de verre. Le phénomène de retrait est suffisamment rapide pour qu'il soit achevé avant le bobinage du fil composite sur un support.

L'écart établi entre la vitesse des filaments organiques et la vitesse d'étirage des filaments de verre est fonction notamment de la nature du matériau thermoplastique employé et du diamètre des filaments organiques. En général, cet écart est déterminé de manière à ce que le phénomène de retrait compense l'excès de longueur initial des filaments organiques par rapport aux filaments de verre. Dès lors que tous les filaments qui constituent le fil composite sont parfaitement alignés au moment du bobinage, la bobine obtenue n'offre plus aucun des défauts précédemment rencontrés. De ce fait, il est possible d'utiliser non plus des manchettes épaisses qui devaient pouvoir supporter les compressions dues au frettage occasionné par le retrait, mais des manchettes ordinaires qu'il est même possible d'enlever après formation des bobines qui deviennent alors des pelotes. Ceci est intéressant car il est donc possible d'utiliser les fils composites selon le principe de la déroulée ou bien de la défilée, par l'intérieur comme par l'extérieur.

Il est également possible dans ce cas de réutiliser ces manchettes plusieurs fois, ce qui représente une économie.

Un autre avantage de ce procédé est d'assurer une homogénéité du fil composite supérieure à celle obtenue par des procédés de fabrication consistant à étirer une fibre de verre ou une nappe de filaments de verre entourée de filaments thermoplastiques.

Dans une première variante selon l'invention, le mélange des filaments thermoplastiques avec les filaments de verre se fait entre la base de la filière et un rouleau enducteur. L'assemblage des filaments thermoplastiques et des filaments de verre se fait alors dans le volume défini par le faisceau de filaments de verre et assure ainsi une excellente homogénéisation.

Dans une seconde variante selon l'invention, le mélange des filaments thermoplastiques avec les filaments de verre se fait sur la ligne de contact des filaments de verre sur un rouleau enducteur. Cette ligne de contact correspond en fait à la génératrice du rouleau enducteur sur laquelle passent les filaments de verre.

Dans une troisième variante selon l'invention, le mélange des filaments thermoplastiques avec les filaments de verre se fait en aval du rouleau enducteur. Les filaments de verre se répartissent alors non plus sous forme d'un volume mais sous forme d'une nappe plane. L'assemblage des deux types de filaments s'opère donc sur un plan. Ce type d'association permet également une très bonne homogénéisation et permet d'éliminer tout risque de dégradation des filaments de verre lors de la projection.

Il peut être parfois intéressant de régler la vitesse des filaments organiques à une valeur telle que leur excès de longueur par rapport aux filaments de verre ne soit pas entièrement compensé par le retrait. Il est ainsi possible d'obtenir des fils composites dont les filaments de verre et thermoplastiques sont linéaires ou bien des fils composites dont les filaments de verre sont linéaires et les filaments thermoplastiques sont ondulés, de façon variable. Ainsi il est possible d'obtenir un fil plus ou moins volumineux qui peut notamment être utilisé pour la fabrication de tissus.

Selon un mode préféré de l'invention, on fixe une vitesse des filaments thermoplastiques de manière à obtenir le volume du fil composite désiré.

L'invention propose également un dispositif permettant la mise en oeuvre de ce procédé.

Selon l'invention, pour permettre la fabrication d'un fil composite formé par l'association de filaments continus de verre et de filaments continus de matière organique thermoplastique, ce dispositif comprend d'une part une installation comprenant au moins une filière, alimentée en verre, dont la face inférieure est munie d'une multiplicité d'orifices, cette filière étant associée à un rouleau enducteur, d'autre part une autre installation comprenant au moins une tête de filage alimentée sous pression en matière thermoplastique fondue, dont la face inférieure est munie d'une multiplicité d'orifices, cette tête de filage étant associée à un étireur à vitesse variable, du type à tambours, et à un moyen permettant de mêler les filaments thermoplastiques aux filaments de verre et enfin des moyens communs aux deux installations permettant l'assemblage et le bobinage du fil composite.

De façon préférée, le moyen permettant de mêler les deux types de filaments est un dispositif mettant en oeuvre les propriétés des fluides qui peuvent être des liquides ou des gaz tels que de pulsé ou comprimé. Il peut s'agir par exemple d'un dispositif venturi, dont le rôle est uniquement de projeter les filaments thermoplastiques en leur donnant une orientation et une répartition spatiale adéquates.

L'implantation de la filière, de la tête de filage, de l'étireur à tambours et du dispositif permettant de mêler les filaments thermoplastiques aux filaments de verre, peut être réalisée sur un même niveau, contrairement à certaines implantations de l'art antérieur. Pour cela, il est possible de disposer un élément de déviation telle qu'un rouleau entre la tête de filage de matière organique et l'étireur à tambours.

Dans une variante, il est possible de prévoir un élément tel qu'un déflecteur disposé derrière les filaments de verre et face à la zone de projection des filaments thermoplastiques c'est à dire face au venturi. Cet élément permet de limiter la traversée des filaments thermoplastiques dans la nappe de verre.

Le moyen permettant de mêler les deux types de filaments peut être constitué par l'association de deux rouleaux. Un premier rouleau "guide" éventuellement moteur oriente la nappe de filaments thermoplastiques vers un second rouleau. Sur ce second rouleau, les filaments thermoplastiques se mêlent aux filaments de verre, également sous la forme d'une nappe.

Les dispositifs ainsi décrits permettent la réalisation de fils composites à partir de filaments de verre et de filaments thermoplastiques où ces derniers arrivent, au lieu de rencontre avec les filaments de verre avec une vitesse supérieure à la vitesse d'étirage du fil composite.

D'autres détails et caractéristiques avantageuses de l'invention ressortent ci-après de la description des exemples de dispositifs mettant en oeuvre l'invention décrits en références aux figures qui représentent
- figure 1 a,b des représentations schématiques d'une installation selon l'invention,
- figure 2 : une représentation schématique d'un second mode de réalisation,
- figure 3 : une représentation schématique d'un troisième mode de réalisation,
- figure 4 a,b,c : des représentations schématiques de coupes droites de fils composites obtenus selon l'invention et selon les techniques antérieures.

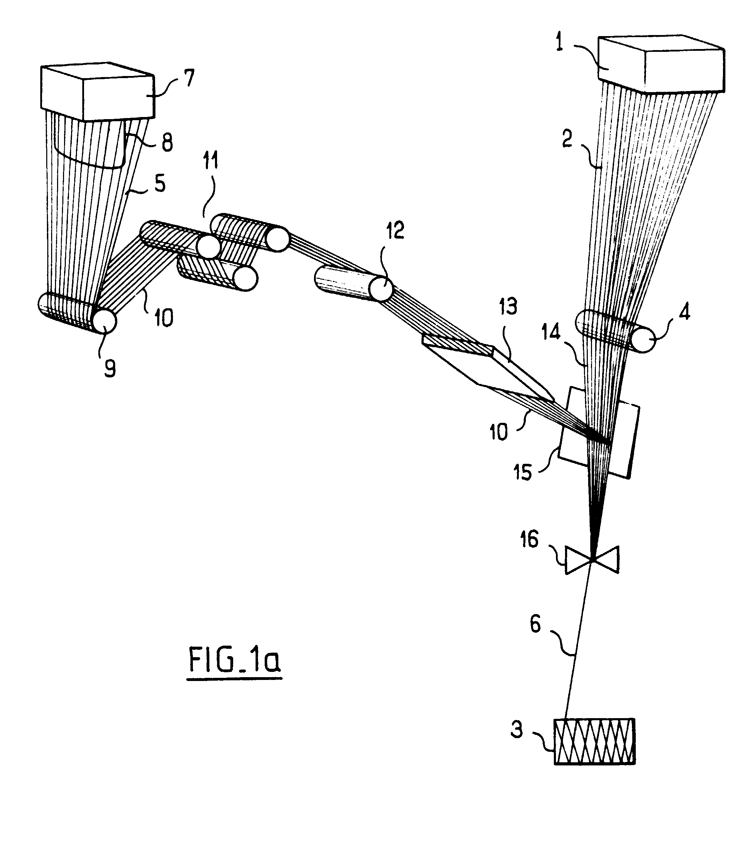

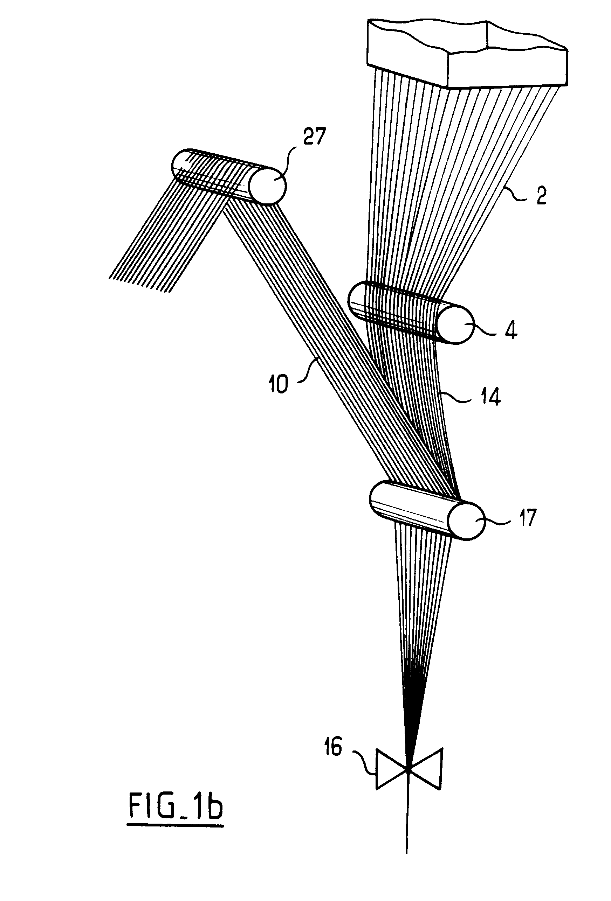

Sur la figure 1a est représentée une vue schématique d'une installation complète selon l'invention. Une filière 1, alimentée en verre soit depuis l'avant-corps d'un four qui achemine directement le verre en fusion jusqu'à son sommet, soit par une trémie contenant du verre froid, par exemple sous forme de billes, qui tombe par simple gravité. Selon l'une ou l'autre de ces alimentations, la filière 1 est habituellement en alliage platine-rhodium et chauffée par effet joule de façon à refondre le verre ou à le maintenir à une température élevée. Le verre fondu s'écoule alors sous la forme d'une multitude de filets étirés sous la forme d'un faisceau 2 de filaments, par un dispositif, non représenté qui permet également de former la bobine 3, sur lequel il sera revenu par la suite. Ces filaments 2 passent ensuite sur un rouleau enducteur 4 qui dépose un apprêt ou ensimage sur les filaments de verre. Cet ensimage peut comprendre des composés, ou leurs dérivés, constituant les filaments thermoplastiques 5 qui vont venir s'associer aux filaments de verre pour former un fil composite 6.

Sur cette figure 1a, est également représentée schématiquement une tête de filage 7 d'où sont extrudés les filaments thermoplastiques 5. La tête de filage 7 peut être alimentée par un matériau thermoplastique stocké par exemple sous forme de granulés qui est fondu puis qui s'écoule sous pression par de multiples orifices placés sous la tête de filage 7, pour former les filaments 5 par étirage et refroidissement. Le refroidissement des filaments est réalisé par convection forcée, par un dispositif de conditionnement 8 de forme adaptée à celle de la tête de filage 7 et qui génère un écoulement d'air laminaire perpendiculaire aux filaments. L'air de refroidissement à un débit, une température et une hygrométrie maintenus constants. Les filaments 5 passent ensuite sur un rouleau 9 qui permet d'une part de les rassembler sous la forme d'une nappe 10 et d'autre part, de dévier leur trajectoire. De cette façon, il est possible de disposer la filière 1 et la tête de filage 7 sur un même niveau et donc de pouvoir réaliser des fils composites sur des sites où jusque là n'étaient réalisées que des fils de verre, sans nécessiter de grosses modifications si ce n'est l'installation d'une position de filage pour thermoplastique. En effet, les dispositifs déjà proposés pour la réalisation de fils composites nécessitent en général une arrivée du fil ou de la nappe de filaments de verre au-dessus de la filière thermoplastique et donc une installation de la filière de verre sur un niveau plus élevé. Cela conduit généralement à une totale modification des structures.

Après passage sur le rouleau 9, la nappe 10 de filaments thermoplastiques passe sur un étireur à tambours 11 formé par exemple de trois tambours. Ces tambours peuvent tourner à la même vitesse ou bien avoir des vitesses différentes de sorte que l'accélération se fasse dans le sens du défilement des filaments thermoplastiques. Cet étireur à tambours 11 a pour fonction d'étirer les filaments 5 et également de conférer une vitesse déterminée à la nappe 10. Il permet aussi de réaliser une séparation entre les tensions d'étirage et de bobinage des filaments thermoplastiques 5. Il est également possible de faire varier très facilement la vitesse des tambours de façon à ajuster très précisément la vitesse de projection de la matière thermoplastique dans la nappe de verre 14.

La nappe 10 passe ensuite sur un dispositif constitué d'un rouleau de déviation 12 et d'un dispositif venturi 13. Ce dispositif venturi 13 assure l'orientation et la projection des filaments thermoplastiques sous forme d'une nappe 10 dans la nappe de filaments de verre 14 issue de la filière 1. Le dispositif venturi 13 assure uniquement la projection de la nappe thermoplastique 10 dans la nappe de filaments de verre 14 déjà ensimés en maintenant les filaments thermoplastiques individualisés. Par contre, le dispositif venturi 13 ne communique aucune vitesse supplémentaire à la nappe 10 de sorte qu'un minimum d'air comprimé soit projeté sur la nappe de filaments de verre. De cette façon, les risques de perturbations dans la nappe de filaments de verre, dus à l'envoi d'air comprimé en plus de la projection de filaments thermoplastiques, sont limités au maximum.

Face au venturi 13 et donc à la projection des filaments thermoplastiques, est disposé un déflecteur 15, par exemple une plaque de forme appropriée. Le déflecteur 15, qui est placé derrière la nappe de filaments de verre 14, permet de limiter la traversée des filaments thermoplastiques dans la nappe de filaments de verre 14. Lors de l'interpénétration des filaments, les risques de dommages ou de casses des filaments de verre sont limités du fait de la faible masse des filaments thermoplastiques.

Après cette interpénétration, les filaments thermoplastiques sont naturellement entrainés dans la direction de la nappe de filaments de verre, par effet d'air induit descendant, par gravité, par pincement entre les filaments de verre, par enroulement, croisements et frottements entre les deux types de filaments.

Il est possible de légèrement modifier ce dispositif en incorporant un rouleau "guide" 27, éventuellement moteur et un rouleau "presseur" 17 supplémentaires. Le dispositif ainsi modifié est représenté sur la figure 1b. Les filaments thermoplastiques sont alors mêlés aux filaments de verre de façon à ce que la jonction des deux nappes se fasse sur une génératrice du rouleau "presseur 17". Sur cette figure 1b, les filaments thermoplastiques sont mêlés aux filaments de verre selon une autre technique qui consiste à guider les filaments thermoplastiques entre un rouleau "guide" 27 et le rouleau "presseur" 17 où se fait le mélange avec les filaments de verre. Cette technique de guidage a l'avantage de très bien définir la géométrie de la nappe de filaments thermoplastiques et permet donc un mélange avec les filaments de verre très homogène.

L'ensemble des filaments de verre et thermoplastiques passe ensuite sur un dispositif 16 qui permet l'assemblage de ces filaments pour former un fil composite 6. Ce fil composite 6 est alors immédiatement mis sous forme d'une bobine 3 par un dispositif non représenté qui permet l'étirage des filaments de verre à une vitesse linéaire donnée, maintenue constante pour garantir la masse linéique recherchée.

Selon l'invention, la vitesse communiquée à la nappe 10 par l'étireur à tambour 11 est supérieure à la vitesse communiquée par le dispositif d'étirage des filaments de verre. De cette façon, lors de l'interpénétration des filaments, les filaments thermoplastiques arrivent avec une vitesse supérieure à celle des filaments de verre. L'installation selon l'invention permet en fait de créer un surétirage des filaments thermoplastiques au moment du mélange avec les filaments de verre. Le fil composite 6 obtenu se compose donc initialement de filaments de verre linéaires et de filaments thermoplastiques présentant des ondulations. L'amplitude de ces ondulations est fonction de la survitesse communiquée aux filaments thermoplastiques, c'est-à-dire de la différence de vitesses entre la vitesse de l'étireur 11 et la vitesse d'étirage du dispositif formant la bobine 3. Plus cette différence de vitesse est élevée et plus l'amplitude des ondulations que présentent les filaments thermoplastiques est importante. Il est ainsi possible, connaissant la nature de la matière thermoplastique et donc son retrait de fixer cette différence de vitesse de façon à obtenir un fil composite 6 comportant, après retrait, un ensemble de filaments linéaires. Il est aussi possible de la fixer de façon à obtenir un fil composite 6 à haute capacité de remplissage, qui comporte encore après retrait des filaments thermoplastiques ondulés. Ce dernier type de fil composite est notamment intéressant pour certaines applications de tissage car il apporte une épaisseur au tissu.

Cette technique conduit donc à la formation de bobines de fils composites qui contrairement à celles obtenues jusque là, ne présentent plus d'ondulations dues aux filaments de verre et peuvent être déroulées sans problèmes. Il est également possible, les bobines ne se déformant plus, d'enlever la manchette, qui peut alors être réutilisée, et de les dévider par l'intérieur. D'autre part, les filaments de verre restent linéaires et peuvent jouer pleinement leur rôle de renfort unidirectionnel, lorsqu'il est recherché, dans les pièces réalisées à partir de ces fils composites.

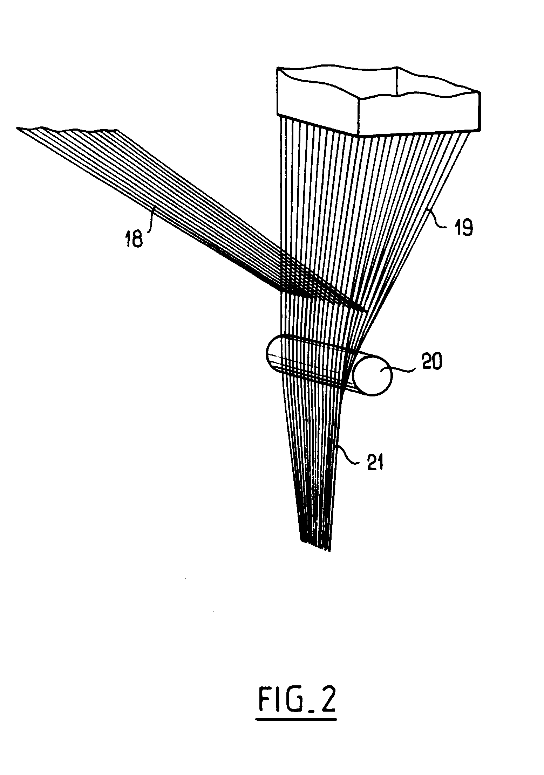

Dans la représentation de l'installation sur les figures 1 a et b, les filaments thermoplastiques sont mêlés aux filaments de verre déjà ensimés et rassemblés sous la forme d'une nappe. Une autre réalisation possible, représentée sur la figure 2, consiste à projeter les filaments thermoplastiques sur les filaments de verre entre la filière et le rouleau enducteur. Pour cela, le rouleau 12, le venturi 13 et le déflecteur 15, qui ne sont pas représentés sur cette figure, sont disposés de façon différente de la figure 1a. Selon cette autre configuration, la nappe 18 de filaments thermoplastiques est projetée dans un faisceau de filaments de verre 19, ne définissant plus comme précédemment une surface, mais un volume. Cette installation permet donc non plus un mélange nappe à nappe, mais nappe à volume ce qui conduit à une homogénéisation qui peut être supérieure au cas précédent. Par contre, la projection des filaments thermoplastiques sur les filaments de verre avant que ceux-ci ne soient ensimés peut augmenter les risques de casse. Le mélange des filaments passe ensuite sur un rouleau ensimeur 20 et revêt l'ensemble des filaments d'une solution d'ensimage. Après passage sur le rouleau 20, l'ensemble des filaments est sous forme d'une nappe 21 qui passe ensuite sur un dispositif non représenté pour rassembler les filaments sous forme d'un fil composite qui est bobiné sur un étireur également non représenté.

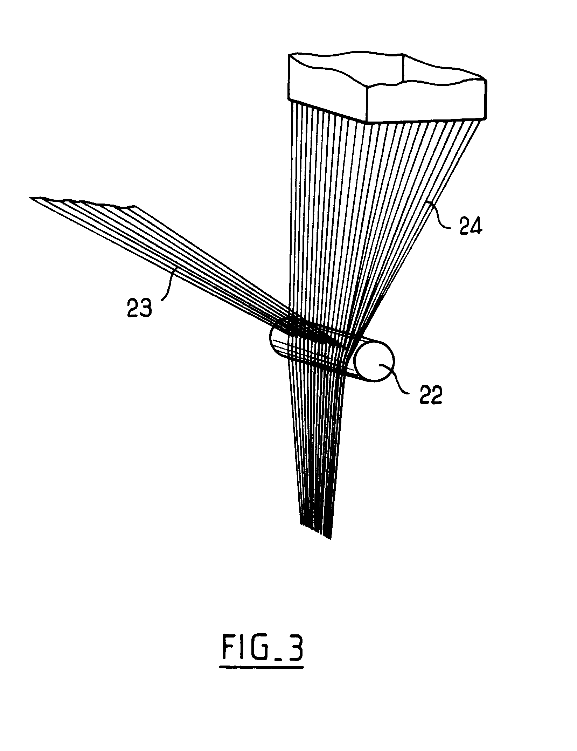

La figure 3 décrit un dispositif permettant un assemblage dans une zone intermédiaire, c'est-à-dire dans la zone du rouleau ensimeur 22. L'assemblage de la nappe de filaments thermoplastiques 23 avec les filaments de verre 24 se fait sur une génératrice du rouleau ensimeur, au moment où les filaments de verre 24 prennent la forme d'une nappe. Ce dispositif permet d'éviter les risques de casse d'une projection dans un faisceau de filaments et optimise l'homogénéisation de l'enchevêtrement des filaments lors du mélange des filaments thermoplastiques avec une nappe de verre. En effet, la nappe de filaments de verre qui converge vers le point d'assemblage présente sa plus grande largeur lors de sa formation, c'est-à-dire sur le rouleau ensimeur. Et cette plus grande largeur, qui correspond aux plus grands intervalles entre deux filaments de verre, assure un mélange des filaments le plus homogène possible lors de la projection. Cette configuration permet d'envisager un mélange des filaments par projection à l'aide par exemple d'un dispositif venturi ou bien par guidage à l'aide d'un rouleau guide. Il évite également l'utilisation d'un déflecteur car son rôle peut être joué par l'installation qui entoure le rouleau ensimeur.

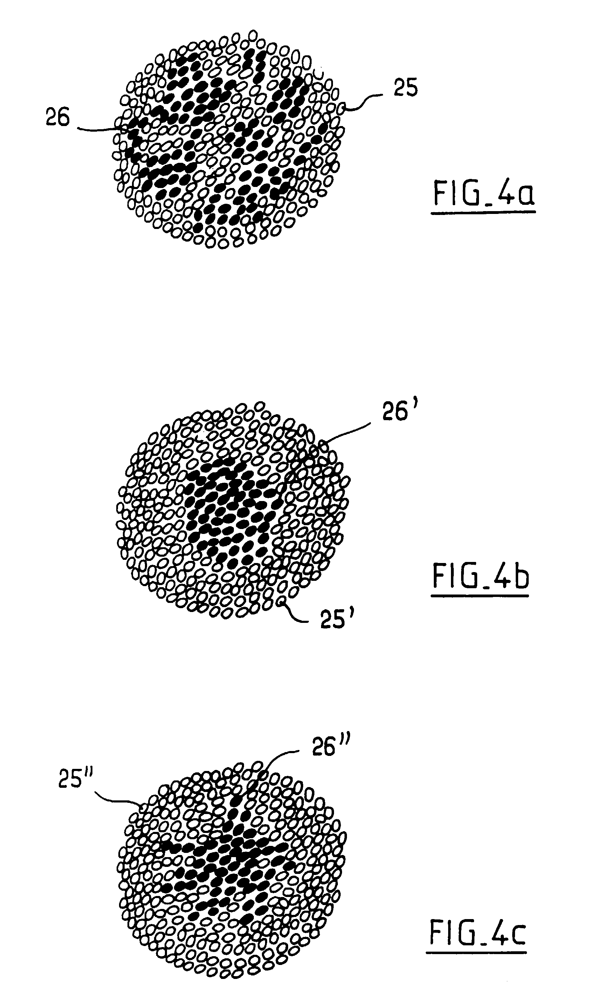

Sur les figures 4 a,b,c sont représentées schématiquement des coupes droites de fils composites obtenus par différents procédés. La figure 4a est une représentation d'une coupe d'un fil composite obtenu selon l'invention. On observe une répartition homogène des filaments thermoplastiques 25 et des filaments de verre 26. Une bonne homogénéisation du fil composite conduit à une meilleure cohésion du fil composite. Les figures 4b et 4c représentent des coupes droites de fils composites obtenus par d'autres procédés tels que l'utilisation d'une filière thermoplastique annulaire, soit par association fil à nappe (figure 4b), soit par association nappe à nappe (figure 4c). Dans ces deux cas, la répartition des filaments est moins homogène et le coeur du fil est une zone privilégiée pour les filaments de verre 26', 26'' alors que les filaments thermoplastiques 25', 25'' sont plus en périphérie. Notons que l'assemblage nappe à nappe aboutit à une meilleure homogénéisation.

Il est possible d'apporter quelques modifications aux disposifs décrits. Tout d'abord, la solution d'ensimage peut contenir un photo-amorceur, susceptible d'initier une transformation chimique de l'ensimage sous l'action d'un rayonnement actinique. Un tel ensimage permet d'augmenter encore la cohésion du fil composite. Pour le mettre en oeuvre, il suffit de disposer sur le parcours du fil composite une source de rayonnements du type ultra-violets entre le dispositif d'assemblage et le dispositif permettant la réalisation d'une bobine. Il peut également s'agir d'un amorceur thermique qui est mis en oeuvre par un traitement thermique.

Il est également possible d'associer l'invention à la réalisation de fils composites complexes, c'est à dire de fils composites comportant différentes matières organiques thermoplastiques. Pour cela, il est possible de projeter des filaments de différentes natures obtenus par exemple à partir de plusieurs têtes de filage et préassemblés avant la projection sur les filaments de verre.

## Revendications

1. Procédé de fabrication d'un fil composite (6) formé par l'association de filaments continus de verre (2, 14, 19, 24, 26) issus d'une filière (1) et de filaments continus de matière organique thermoplastique (5, 10, 18, 23, 25) issus d'au moins une tête de filage (7) caractérisé en ce que les filaments thermoplastiques (10, 18, 23) sont mêlés sous forme d'une nappe à un faisceau ou nappe de filaments de verre (2, 14, 19, 24) et en ce que la vitesse des filaments thermoplastiques (10, 18, 23) lors de leur pénétration dans le faisceau ou nappe de filaments de verre (2, 14, 19, 24) est supérieure à la vitesse d'étirage des filaments de verre (2, 14, 19, 24, 26).

2. Procédé selon la revendication 1 caractérisé en ce que l'on mélange les filaments thermoplastiques (18) au faisceau (19) de filaments de verre, entre la base de la filière (1) et un dispositif enducteur (20).

3. Procédé selon la revendication 1, caractérisé en ce que l'on mélange les filaments thermoplastiques (23) avec les filaments de verre (24) sur la génératrice d'un rouleau enducteur (22) où sont enduits les filaments de verre (24).

4. Procédé selon la revendication 1 caractérisé en ce que l'on mélange les filaments thermoplastiques (10) avec la nappe (14) de filaments de verre en aval d'un rouleau enducteur.

5. Procédé selon l'une des revendications 1 à 4 caractérisé en ce que l'on fixe la vitesse des filaments thermoplastiques (10, 18, 23) de manière à obtenir un volume du fil composite désiré.

6. Procédé selon l'une des revendications précédentes, caractérisé en ce que les filaments thermoplastiques sont projetés sous forme d'une nappe sur un faisceau ou nappe de filaments de verre.

7. Dispositif pour la fabrication d'un fil composite formé par l'association de filaments continus de verre (2, 14, 19, 24, 26) et de filaments continus de matière organique thermoplastique (5, 10, 18, 23, 25) comprenant d'une part au moins une filière (1) alimentée en verre dont la face inférieure est munie d'une multiplicité d'orifices, associée à un dispositif enducteur (4, 20, 22), d'autre part au moins une tête de filage (7) alimentée en matière thermoplastique fondue, dont la face inférieure est munie d'une multiplicité d'orifices, et des moyens (3, 16), communs à la filière (1) et à la tête de filage (7), permettant l'assemblage et l'étirage du fil composite (6) caractérisé en ce que la filière thermoplastique (7) est associée à un étireur (11) à vitesse variable, du type à tambours et à un moyen (13, 27) permettant de mêler des filaments thermoplastiques à des filaments de verre.

8. Dispositif selon la revendication 7, caractérisé en ce que le moyen permettant le mélange des filaments thermoplastiques à des filaments de verre est un dispositif venturi (13).

9. Dispositif selon la revendication 8, caractérisé en ce que le dispositif venturi (13) est orienté face à un déflecteur (15), placé derrière les filaments de verre.

10. Dispositif selon la revendication 7, caractérisé en ce que le moyen permettant le mélange des filaments thermoplastiques à des filaments de verre se compose d'un rouleau "guide" (27) et d'un rouleau "presseur" (17).

11. Dispositif selon l'une des revendication 7 à 10, caractérisé en ce qu'un rouleau de déviation (9) est placé entre la filière (7) et l'étireur à tambours (11).

## Patentansprüche

1. Verfahren zur Herstellung eines Verbundfadens (6), der durch Verbindung endloser Glasfilamente (2, 14, 19, 24, 26), die aus einer Spinndüse (1) kommen, mit endlosen Filamenten (5, 10, 18, 23, 25) aus thermoplastischem organischem Material, die aus mindestens einem Spinnkopf (7) kommen, gebildet wird, **dadurch gekennzeichnet, daß** die thermoplastischen Filamente (10, 18, 23) bahnförmig mit einem Bündel oder einer Bahn aus Glasfilamenten (2, 14, 19, 24) versponnen werden **und daß** die Geschwindigkeit der thermoplastischen Filamente (10, 18, 23) bei ihrem Eintritt in das Bündel oder die Bahn aus Glasfilamenten (2, 14, 19, 24) größer als die Ziehgeschwindigkeit der Glasfilamente (2, 14, 19, 24, 26) ist.

2. Verfahren nach Anspruch 1, **dadurch gekennzeichnet, daß** die thermoplastischen Filamente (18) mit dem Bündel (19) aus Glasfilamenten zwischen dem Boden der Spinndüse (1) und einer Beschichtungseinrichtung (20) vermengt werden.

3. Verfahren nach Anspruch 1, **dadurch gekennzeichnet, daß** man die thermoplastischen Filamente (23) mit den Glasfilamenten (24) auf der Erzeugenden einer Beschichtungswalze (22) vermengt, auf welcher die Glasfilamente (24) eingestrichen werden.

4. Verfahren nach Anspruch 1, **dadurch gekennzeichnet, daß** die thermoplastischen Filamente (10) mit der Bahn (14) aus Glasfilamenten nach einer Beschichtungswalze vermengt werden.

5. Verfahren nach einem der Ansprüche 1 bis 4, **dadurch gekennzeichnet, daß** die Geschwindigkeit der thermoplastischen Filamente (10, 18, 23) derart eingestellt wird, daß der Verbundfaden das gewünschte Volumen erhält.

6. Verfahren nach einem der vorhergehenden Ansprüche, **dadurch gekennzeichnet, daß** die thermoplastischen Filamente bahnförmig auf ein Bündel oder eine Bahn aus Glasfilamenten aufgeschleudert werden.

7. Vorrichtung zur Herstellung eines Verbundfadens, der durch Verbindung endloser Glasfilamente (2, 14, 19, 24, 26) mit endlosen Filamenten (5, 10, 18, 23, 25) aus thermoplastischem organischem Material gebildet ist, welche einerseits mindestens eine mit einer Beschichtungseinrichtung (4, 20, 22) verbundene, mit Glas versorgte Spinndüse (1), deren Unterseite mit einer Vielzahl von Öffnungen versehen ist, andererseits mindestens einen mit geschmolzenem Thermoplast versorgten Spinnkopf (7), dessen Unterseite mit einer Vielzahl von Öffnungen versehen ist, und Mittel (3, 16), die der Spinndüse (1) und dem Spinnkopf (7) gemeinsam sind und die Verbindung und den Ziehvorgang des Verbundfadens (6) ermöglichen, umfaßt, **dadurch gekennzeichnet, daß** der Spinnkopf (7) für den Thermoplast mit einem mehrere Walzen umfassenden Ziehwerk (11) mit veränderlicher Geschwindigkeit und einem Mittel (13, 27) verbunden ist, welches das Vermengen der thermoplastischen Filamente mit den Glasfilamenten erlaubt.

8. Vorrichtung nach Anspruch 7, **dadurch gekennzeichnet, daß** das Mittel, welches das Vermengen der thermoplastischen Filamente mit den Glasfilamenten erlaubt, eine Venturidüse (13) ist.

9. Vorrichtung nach Anspruch 8, **dadurch gekennzeichnet, daß** die Venturidüse (13) auf eine hinter den Glasfilamenten angebrachte Ablenkplatte (15) ausgerichtet ist.

10. Vorrichtung nach Anspruch 7, **dadurch gekennzeichnet, daß** das Mittel, welches das Vermengen der thermoplastischen Filamente mit den Glasfilamenten erlaubt, aus einer "Führungs"- (27) und einer "Spann"-Rolle (17) besteht.

11. Vorrichtung nach einem der Ansprüche 7 bis 10, **dadurch gekennzeichnet, daß** zwischen Spinnkopf (7) und Walzenziehwerk (11) eine Ablenkrolle (9) angeordnet ist.

## Claims

1. Method of manufacturing a composite thread (6) formed by the combination of continuous glass filaments (2, 14, 19, 24, 26) emerging from a die (1) and continuous filaments of organic, thermoplastic material (5, 10, 18, 23, 25) emerging from at least one extrusion head (7), characterized in that the thermoplastic filaments (10, 18, 23) are mixed in sheet form with a bundle or sheet of glass filaments (2,14, 19, 24), and in that the speed of the thermoplastic filaments (10, 18, 23) when they penetrate the bundle or sheet of glass filaments (2, 14, 19, 24) is greater than the drawing speed of the glass filaments (2, 14, 19, 24, 26).

2. Method according to Claim 1, characterized in that the thermoplastic filaments (18) are mixed with the bundle (19) of glass filaments between the base of the die (1) and a coating device (20).

3. Method according to Claim 1, characterized in that the thermoplastic filaments (23) are mixed with the glass filaments (24) on the generatrix of a coating roller (22) where the glass filaments (24) are coated.

4. Method according to Claim 1, characterized in that the thermoplastic filaments (10) are mixed with the sheet (14) of glass filaments downstream of a coating roller.

5. Method according to any one of Claims 1 to 4, characterized in that the speed of the thermoplastic filaments (10, 18, 23) is set so as to achieve a desired volume of the composite thread.

6. Method according to any one of the preceding claims, characterized in that the thermoplastic filaments are projected in sheet form towards a bundle or sheet of glass filaments.

7. Device for manufacturing a composite thread formed by the combination of continuous glass filaments (2, 14, 19, 24, 26) and continuous filaments of organic, thermoplastic material (5, 10, 18, 23, 25) comprising, on the one hand, at least one die (1) supplied with glass, having a plurality of holes in its lower face, and associated with a coating device (4, 20, 22) and, on the other hand, at least one extrusion head (7) supplied with molten thermoplastic material and having a plurality of holes in its lower face, and means (3, 16) common to the die (1) and to the extrusion head (7) for assembling and drawing the composite thread (6), characterized in that the thermoplastics die (7) is associated with a variable-speed roller stretcher (11) and with a means (13, 27) for mixing the thermoplastic filaments with glass filaments.

8. Device according to Claim 7, characterized in that the means for mixing the thermoplastic filaments with glass filaments is a venturi device (13).

9. Device according to Claim 8, characterized in that the venturi device (13) is oriented facing a deflector (15) disposed behind the glass filaments.

10. Device according to Claim 7, characterized in that the means for mixing the thermoplastic filaments with glass filaments is composed of a "guide" roller (27) and a "pressure" roller (17).

11. Device according to any one of Claims 7 to 10, characterized in that a deflection roller (9) is disposed between the die (7) and the roller stretcher (11).
